# EUROPEAN PATENT APPLICATION

(11) **EP 2 051 023 A1**
(43) Date of publication of application: **22.04.2009**
(21) Application number: 07788635.6
(22) Date of filing: 28.06.2007
(51) Int. Cl.: F24J 2/54

(54) **SUPPORT STRUCTURE FOR SOLAR TRACKERS**

(30) Priority: 28.06.2006 ES 200601528 U
(71) Applicant: Sistema Hidraulico Solar, Sl, Lugo (ES)
(72) Inventor: PENALONGA TEIJEIRO, Luis J., 27003 Lugo - Galicia (ES)
(74) Representative: Gislon, Gabriele
(86) International application number: PCT/ES2007/000387
(87) International publication number: WO 2008/000876

(57) **Abstract**

The support structure of the invention comprises a first frame (1) that provides an anchoring base (2), to which is connected a second frame (9) carrying the solar panels (10) the frame (1) having installed, in its upper part, a rocking shaft (3) from which extend, on two opposite sides, support members (5, 5') each ending in points (6, 6') upon each of which bear, in turn, coupled in rotary fashion, arms (7, 7') that are joined via a free end (8) to said frame (9). The structure incorporates devices (12-12') for moving the shaft (3) and devices (16-16') for moving the second frame (9).

## Description

### Technical Field

As indicated in the title, the present invention relates to an original and practical support structure for solar trackers, which due to its special construction allows orienting the solar panels supported thereon in a position substantially perpendicular to the rays of the sun, for a maximum exploitation of the solar rays, with the particularity that said orientation achieves both its position with respect to a horizontal plane, thereby modifying its inclination, and its slant towards any of the four sides of the panels, the orientation being complete from sunrise until sunset, i.e., from when the sun appears to when it disappears, in any geographic location.

### Background of the Invention

There have been many devices until now to orientate solar panels, but they have been either too uncomfortable and expensive or inaccurate, many of the structures even being designed to support small solar panels, not being suitable for large dimensions, both because of the actual weight thereof and because of the force of the winds.

A large number of inventions propose solutions to the explained objectives; the structures which are described in European patent EP 1632786, or PCT WO 2004/036124 can be indicated as the most recent, although it must be pointed out that they are no more than a sample of the numerous existing patents in this respect, although none of them discloses a structure such as that which is object of the present invention, which has an advantage over all of them with regard to its simplicity and at the same times its ease of assembly and construction, and all that assuring a perfect operation of the assembly.

Man's fascination with the sun has been traced from the beginning of history and has led him to some notable achievements, particularly during the past 50 years, in the development of devices to capture and use the energy of this limitless source. A gradual but accelerated recognition, especially in the 1980s, with a drop in the 1990s and a recent resurgence about the finite limit of the world's supply of fossil fuels and the lack of existing alternative energy sources, has generated a sense of urgency as to the need to spread a wide and immediate use of these devices.

In short the proposed solar collector must be assembled and moved so that it follows the movement of the sun, since the key of an efficient operation of any solar collector lies in keeping the active surface of the collector or solar panel perpendicular to the impinging radiation for as much time as possible during the daytime transit.

### Brief Description of the Invention

This invention essentially proposes an improved support structure for solar trackers by means of which a mechanism automatically tracking the sun in its movement across the sky from sunrise to sunset is provided. It is more particularly related to a means of tracking solar energy to move devices such as solar collectors, reflectors, or solar panels and the like, in response to the daytime movement of the sun.

It is formed by a carrying structure in the form of a frame 1 with means to be jointly fixed on a base 2, its upper ends meeting at an edge or rocking shaft 3 to which symmetrical arm structures formed by two triangles 4 are joined at two opposite sides. At the vertex of said triangles and as a rotation point 6-6', there are arranged arms 7-7' having a bearing point at 6-6' and on which they rotate, and are fixed at their other end 8 to the flat frame 9 on which the solar panels 10 will be placed.

It must be pointed out that instead of said triangular structures, other structures formed by a type of truncated cone with a base in the shaft 3 could be used.

Said carrying structure provides the movements at its rocking shafts 3 and 6-6' by means of mechanisms which are arranged:
a) in the rocking shaft 3 by means of a bridge part 11 in the form of a yoke having for example two hydraulic pistons or cylinders 12-12' which are borne on the frame 1 at points 13-13' and at the ends of the bridge part 11 at points 14-14', it even being able to have a bar 15 joining the arms 5-5' as a reinforcement, on which both the bridge part 11 and the pistons are borne at points 13-13' to give greater rigidity to the mechanical assembly;
b) including the other devices such as hydraulic pistons 16-16', arranged between any of the arms 5-5' at point 17 close to the shaft 6 and at point 18 to the frame 9 on which the solar panels 10 are placed.

If as has been pointed out a structure formed by an arm with a conical shape 4 is used, the device 12-12' will be borne thereon at its points 14-14'.

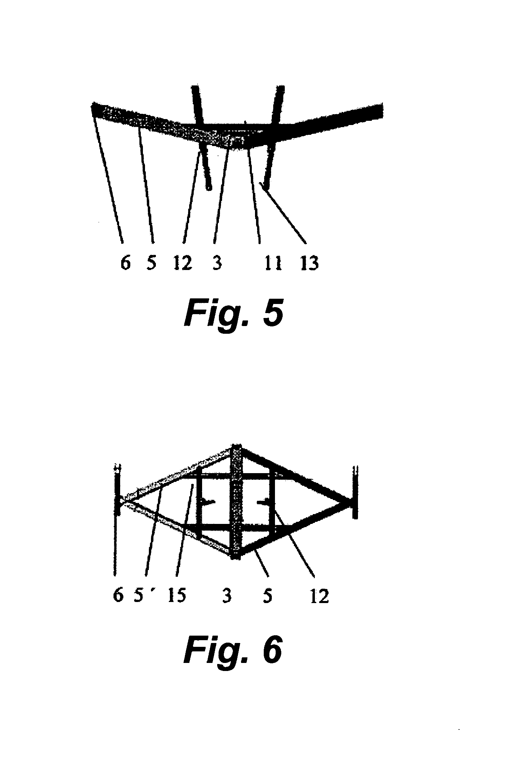

A bar 15 illustrated in Figure 6, could be an alternative or replacement of the bridge part 11 since with the bearing of the movement devices 12-12' and their ends in arms 5-5' it would cause the rocking movement of the shaft 3.

The proposed support structure, suitably orientated, can combine the movements of its devices 12-12' and 16-16' such that they in turn establish the resulting suitable orientation of the plane 9 carrying the solar panels 10 to receive the solar rays perpendicularly since the rocking shaft 3 will always form an imaginary axis X and shaft points 6-6' will together form an imaginary axis Z, such that both axes X-Z meet forming a cross, all of which allows that they are able to cover, in their combined movements, all the spatial points of interest from the rising position to the setting position, i.e., from east to west, being able to adjust both axes to the different heights of the sun during the entire year.

The support structure for solar trackers object of the present invention provides advantages both for the assembly and for the use and maintenance, as well as providing easy-to-program movement devices considering the infinity of existing programs for this type of control of hydraulic piston or cylinder devices 12-12' and 16-16', in turn being a very solid structure to support both the weight of the actual solar panels and the force of the winds, and the problem that this involves since said orientation control devices allow controlling it, even to leave the orientation inoperative with respect to the sun, and moved to a flat position to withstand the winds. In the same way the proposed structure allows returning to position once the sun has set, waiting either in standby, flat or vertical, or waiting orientated towards the sunrise, all this by means of the control devices which are very well known in the market and for which this improved support structure for solar trackers is suitable.

Furthermore, this support structure has a solidity with regard to the movement mechanisms or devices 12-12' and 16-16' used and the actual supports both at the base 1 at the rocking shaft 3 and at the arms 4, and the actual frame carrying the solar panels 9, all this providing a unity both for movement and for resistance and even maintenance.

The assembly of the structure is very easy since its elements are simple structures, arranged as described in the present specification. A pre-established orientation of the actual base according to the known art is furthermore taken into consideration to face from East to West from sunrise to sunset, a requirement which is very well known and practiced by all solar installations of this type, although with the structure object of the present invention it can be contemplated that the axis Z between points 6-6' will pivot in the same way as the shaft 3, i.e., in the two directions, whereby it is possible to cover the entire path with the axis Z from East to West, and with the axis X from North to South, being able to put the panel in any pre-established orientation and position, even though no orientation of the column or base 1 had been carried out previously, which is an advantage of the actual structure.

### Description of the Drawings

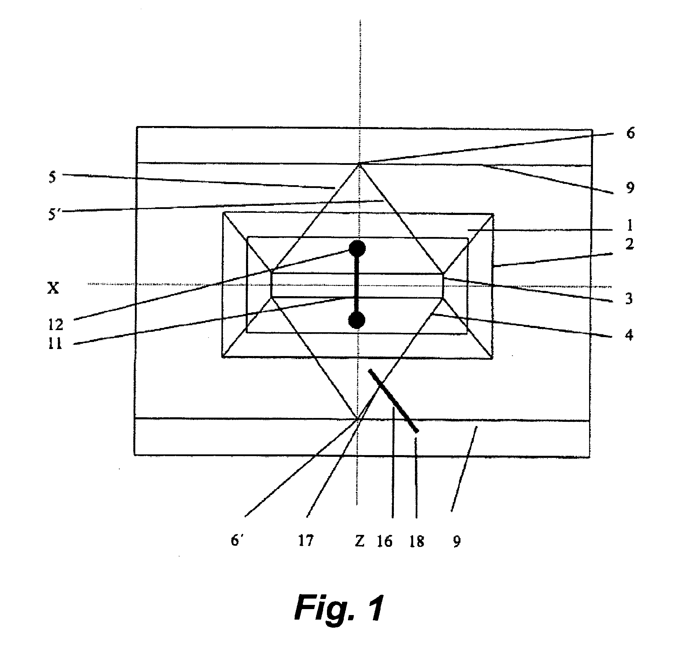

Figure 1 is a general plan view of the entire structure object of the invention, which allows observing the axes X - Z arranged in a cross, and where the rocking shafts 3 and 6-6' actuated by means of devices 12, 16 are arranged (only one member of the latter being depicted), and being able to see the arms 4 in the form of triangles formed by sides 5-5' and side 3 of the rocking shaft.

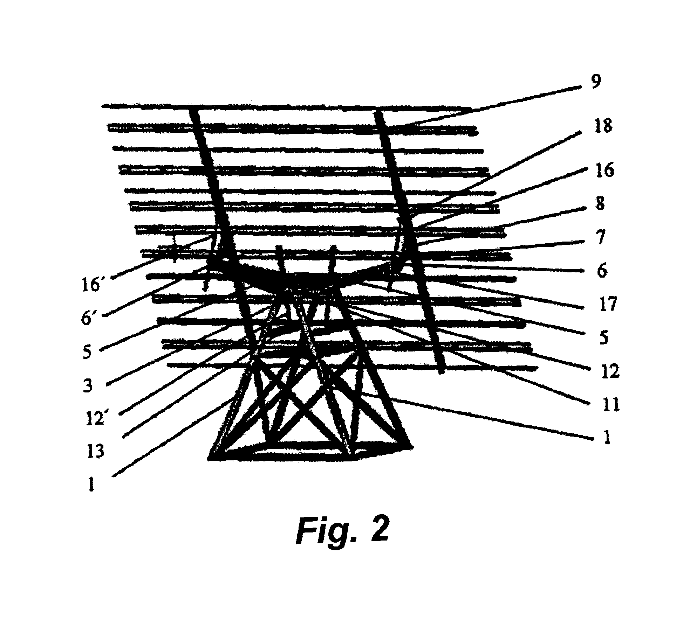

Figure 2 is a general perspective view of the structure object of the invention, in which the upper frame 9 is in a raised position, with a small inclination, all this on the rotation point 6 and the arms 7 can be observed, which arms at point 8 are joined to the frame 9 and which are actuated by means of the device 16-16' which in turn is joined to the frame 9 at point 18 and to arm 5 at point 17. The other rocking shaft 3 borne on the frame 1 is horizontally balanced, the devices 12-12' actuating the rocking shaft 3 having been depicted.

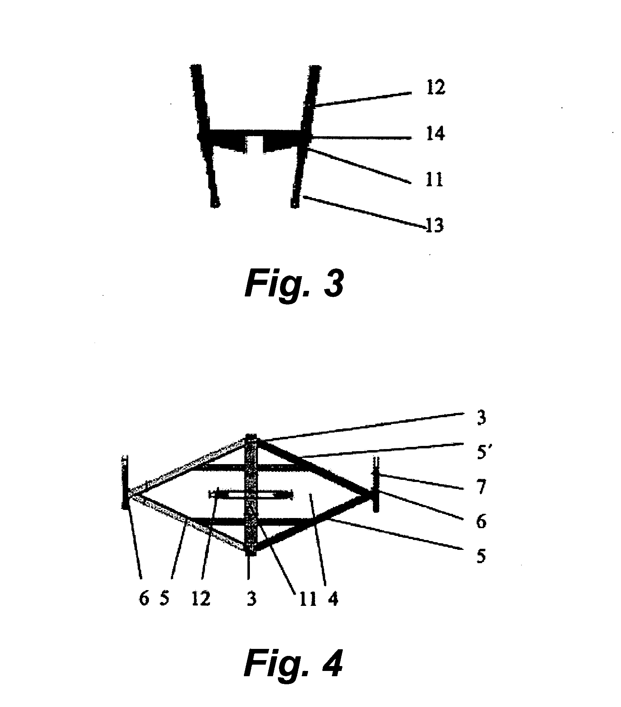

Figure 3 is a separate depiction of the bridge part 11 which at its central point is joined to the rocking shaft 3 and at the ends at point 14 is joined to the device 12 which in turn is joined with the frame 1 at point 13.
Figure 4 is a separate depiction of the two triangular structures 4 formed by the arms 5-5' and the rocking shaft 3, seeing that at the joining vertex of the arms 5-5' it carries the rotation shaft 6 on which the arm 7 is borne; the bridge part 11 actuating the shaft 3 by means of the devices 12 is depicted in the same way.
Figure 5 is a front view of the depiction in Figure 4, in which the assembly of the bridge part 11 together with the devices 12 and the arms 5 is seen in more detail.
Figure 6 is equivalent to Figure 4, in which the bridge part 11 has been replaced by the bars 15 which are joined to the arms 5-5', the rocking shaft 3 being actuated in the same way.

### Description of a Preferred Embodiment of the Invention

In a preferred embodiment of the invention the proposed support structure for solar trackers comprises a frame 1 with a base, in the upper part of which there is arranged a rocking shaft 3 from which at each of its sides in opposite parts respective arms 5-5' extend which in turn converge at a vertex at rotation points 6-6', giving rise to the triangles 4 formed by the indicated sides 5-5' and the rocking shaft 3. An arm 7 and 7' extends upwardly on rotation points 6 and 6', which arm is stably fixed at point 8 to the frame 9 on which the respective solar panels 10 are placed, all this giving rise to the support structure for solar trackers, object of the present invention.

Said structure in turn incorporates devices 12-12' serving to actuate the rocking movement of the shaft 3 since said shaft 3 has a bridge part 11 joined thereto, and devices 12-12' being borne on the base frame 1 at one end at points 13-13' and at the other in bridge part 11 at points 14-14'.

In the same way the structure incorporates other devices 16-16' serving to actuate the movement of the arms 7-7' which are borne on the rotation point 6-6', said devices 16-16' being joined at one of their ends to one of the arms 5-5' at a point 17 close to the rotation point 6-6' and at the other end of the device 16-16' joined to the frame 9 at point 18.

A detailed description of the different elements forming this embodiment of the proposed support structure for a solar tracker is presented below.

The components which are used are the following:
- 1 -: Support column frame.
- 2 -: Anchoring base of the frame 1.
- 3 -: Rocking shaft acting as an upper edge of two of the sides of the frame 1 converging in the upper part of the frame; this shaft is furthermore the base of the triangles 4 formed by arms 5-5' with said shaft 3.
- 4 -: Triangle formed by arms 5-5' and rocking shaft 3.
- 5-5' -: Sides of the triangle converging at their vertex with rotation points 6-6' and at the other side with rocking shaft 3.
- 6-6' -: Rotation points at which arms 5-5' converge and at which arms 7-7' are in turn borne.
- 7-7' -: Arms which, having their base at rotation points 6-6', are stably joined at area 8 to the frame 9 which will carry the solar panels 10
- 8 -: Area of the frame 9 in which arms 7-7' are stably fixed.
- 9 -: Frame which will support the solar panels 10 and which is borne by 8 at arms 7-7'
- 10 -: Solar panels.
- 11 -: Bridge part in the form of a yoke which is joined at its mid point with the rocking shaft 3 and its ends at points 14-14' with the movement devices 12-12'
- 12-12' -: Movement devices hydraulic pistons or cylinders actuating the rocking shaft 3 being borne at one end 13-13' with the frame 1 and at the other end 14-14' at the bridge part 11
- 13-13' -: Points where the base frame 1 is joined with the movement devices 12-12'
- 14-14' -: Points where the bridge part 11 is joined with the movement devices 12-12'
- 15 -: Reinforcement bar arranged between the arms 5-5' and on which the movement device 12-12' is borne at its points 14-14'- even at the ends of the bridge part 11 I
- 16-16' -: Movement devices hydraulic piston or cylinder joined at one side to arms 5 or 5' and at the other end to the frame 9 of the solar panels 10
- 17 -: Point where the hydraulic piston 16 is joined with any of the arms 5-5'
- 18 -: Point where the hydraulic piston 15 is joined with the frame 9 of the solar panels 10

## Claims

1. A support structure for solar trackers of the type having a first frame (1) that provides an anchoring base (2), a second frame (9) carrying the solar panels (10) being associated to the first frame (1), **characterised in that** said frame (1) has installed in its upper part a rocking shaft (3) from which extend, on two opposite sides, support members (5, 5') each ending in points (6, 6') upon each of which bear, in turn, coupled in rotary fashion, arms (7, 7') that are joined via a free end (8) to said frame (9).

2. The structure according to claim 1, **characterised in that** said support members are formed by respective arms (5-5') extending from the ends of the rocking shaft (3) and converging in vertices providing said rotary coupling points (6-6') of the arms (7, 7').

3. The structure according to claim 1, **characterised by** incorporating movement devices (12-12') which are joined at one side to the base frame (1) at points (13-13') and at the other to a bridge part (11) which is in turn joined at its mid point with the rocking shaft (3) and at points (14-14') with the movement devices (12-12') providing the rocking movement of the shaft (3) on an imaginary axis (X).

4. The structure according to claim 1, **characterised by** incorporating movement devices (16-16') that are joined at one side to any of arms (5) or (5') at point (17) and at another part to the frame (9) of the solar panels (10) at point (18), actuating the movement of the panel (9) at the imaginary axis (Z), at rotation points (6-6').

5. The structure according to claim 2, **characterised by** having a bar (15) which joins arms (5-5') to provide support for the devices (12-12') either with the bridge part (11) at points (14-14'), or with the actual devices (12-12') directly at points (14-14') without the bridge part (11) being required.
